# EUROPEAN PATENT APPLICATION

(11) **EP 4 729 661 A1**
(43) Date of publication of application: **22.04.2026**
(21) Application number: 24916230.6
(22) Date of filing: 28.03.2024
(51) Int. Cl.: C25D 1/04, C25D 3/38

(54) **HIGH-TEMPERATURE ULTRAHIGH-STRENGTH HIGH-ELONGATION COPPER FOIL FOR LITHIUM-ION BATTERY, AND PRODUCTION PROCESS THEREFOR**

(30) Priority: 09.01.2024 CN 202410028131
(71) Applicant: Jiujiang Defu Technology Co., Ltd, Jiujiang, Jiangxi 332000 (CN)
(72) Inventor: WEN, Min, Jiujiang, Jiangxi 332000 (CN); DONG, Chaolong, Jiujiang, Jiangxi 332000 (CN); GE, Hongxin, Jiujiang, Jiangxi 332000 (CN); LIU, Chao, Jiujiang, Jiangxi 332000 (CN); ZHOU, Fengcheng, Jiujiang, Jiangxi 332000 (CN); LUO, Jia, Jiujiang, Jiangxi 332000 (CN); JIANG, Yang, Jiujiang, Jiangxi 332000 (CN)
(74) Representative: Canzler & Bergmeier Patentanwälte Partnerschaft mbB
(86) International application number: PCT/CN2024/084576
(87) International publication number: WO 2025/148171

(57) **Abstract**

Disclosed in the present invention are a high-temperature ultrahigh-strength high-elongation copper foil for a lithium-ion battery, and a production process therefor. The production process comprises the following steps: step S1, preparing an electrolyte by dissolving raw copper in a sulfuric acid solution to form a dissolved solution, filtering same to remove impurities and then mixing same with a composite additive to obtain the electrolyte, wherein the composite additive comprises an organic sulfide, gelatin, polyethylene glycol, a nitrogen-containing compound, a polyether compound and Cl⁻; step S2, preparing a primary copper foil by introducing the electrolyte into an electrolytic cell of a crude foil machine via a pipeline and carrying out electroplating to obtain the primary copper foil; and step S3, subjecting the primary copper foil to a surface passivation treatment, drying and winding to obtain an ultrahigh-strength copper foil for a lithium-ion battery. A high-performance additive is introduced to control the grain refinement and uniform distribution of the copper foil, thereby improving the strength and ductility thereof; the thermal stability and strength of the improved copper foil in a high-temperature environment are maintained, thereby ensuring long-term stable operation of the improved copper foil after high-temperature cyclic charging and discharging of a silicon negative-electrode battery.

## Description

### Background of the Present Disclosure

### CROSS REFERENCE TO RELATED APPLICATIONS

The present disclosure is an application claiming the benefit of priority to a Chinese Patent Application No. 202410028131.4, filed on January 9, 2024, entitled "HIGH-TEMPERATURE ULTRA-HIGH-STRENGTH AND HIGH-ELONGATION LITHIUM-ION BATTERY COPPER FOIL AND PRODUCTION PROCESS THEREOF", the disclosure of all is incorporated herein by reference in their entireties.

### FIELD OF DISCLOSURE

The present disclosure relates to the technical field of copper foils, and in particular to a high-temperature ultra-high-strength and high-elongation lithium-ion battery copper foil and a production process thereof.

### DESCRIPTION OF RELATED ARTS

With the ongoing energy transition and the rapid development of electronic devices, the demand for high-performance and safer energy storage systems is continuously increasing. Against this backdrop, lithium-ion batteries have become the preferred choice in the market due to their high energy density, long cycle life, and good stability. In recent years, to further improve the energy density of batteries, silicon anode materials have attracted significant attention from researchers because their theoretical capacity is much higher than that of conventional graphite anode materials.

However, during the charge and discharge processes, silicon anode materials undergo substantial volumetric expansion (up to approximately 300%), which leads to material pulverization and degradation of the battery's cycling performance. In addition, the higher operating temperatures typically occur during charge-discharge cycles of silicon-based anode lithium-ion batteries, imposing stricter performance requirements on the copper foil current collector. Therefore, the development of a copper foil that can maintain high mechanical strength, excellent elongation, and stable chemical performance under high temperatures is of great importance for achieving high-performance silicon-based anode lithium-ion batteries.

As the current collector and support for both the anode and cathode materials, copper foil not only serves as a conductive substrate but also has to withstand various mechanical stresses and high-temperature conditions during battery fabrication and operation. Existing lithium-ion battery copper foils often fail to meet the strength and ductility requirements of silicon anode materials, particularly under high-temperature baking and high-stress conditions. For example, conventional copper foils are prone to softening, strength degradation, and grain growth under high-temperature cycling conditions, which can cause delamination of the copper foil and silicon anode material, thereby impairing overall battery performance.

The present disclosure provides a high-temperature ultra-high-strength and high-elongation copper foil, which not only exhibits high tensile strength and high elongation at room temperature but also maintains excellent mechanical properties and stability after exposure to high-temperature environments. The manufacturing process of the copper foil involves the selection of raw materials, the preparation process, and post-processing, ensuring the quality of both the surface and internal structure of the copper foil.

The preparation process includes multiple steps, and the prepared copper foil maintains excellent thermal stability. Furthermore, the prepared copper foil achieves ultra-high mechanical properties.

### SUMMARY OF THE PRESENT DISCLOSURE

The objective of the present disclosure is to provide a high-temperature ultra-high-strength and high-elongation electrolytic copper foil and its production method, which effectively prevents the cracking issues of copper foils caused by high temperature, high stress, and other factors during the manufacturing process of lithium-ion and lithium-silicon batteries (such as coating and wrinkling as well as multi-layer winding), as well as during use (such as expansion and fracture).

The first aspect of the present disclosure provides a method for preparing a high-temperature ultra-high-strength and high-elongation lithium-ion battery copper foil, including the following steps:
Step S1: dissolving raw copper in a sulfuric acid solution, performing filtering to remove impurities and obtain a filtrate, and mixing the filtrate with a composite additive to obtain an electrolyte; wherein the composite additive includes an organic sulfide, gelatin, polyethylene glycol, a nitrogen-containing compound, a polyether compound, and Cl⁻;
Step S2: introducing the electrolyte through a pipe into an electrolytic cell of a foil-forming machine, and obtaining a copper foil intermediate after electroplating; and
Step S3: subjecting the copper foil intermediate to surface passivation, drying, and winding to obtain the ultra-high-strength and high-elongation lithium-ion battery copper foil.

Preferably, the raw copper is copper plates or copper wires.

Preferably, the electrolyte includes sulfuric acid at a concentration of 110-130 g/L, copper ions at a concentration of 85-95 g/L, and a temperature of the electrolyte is in a range of 48-52°C.

Preferably, the composite additive includes 30-100 parts by weight of the organic sulfide, 5-15 parts by weight of the gelatin, 1-20 parts by weight of the polyethylene glycol, 10-20 parts by weight of the nitrogen-containing compound, 1-20 parts by weight of the polyether compound, and 10-40 parts by weight of Cl⁻.

The organic sulfide includes one or more of 3-mercapto-1-propanesulfonate, bis-(3-sulfopropyl) disulfide, bis-(sodium sulfoethyl) disulfide, dimethyl sulfoxide, 2-methyl-2-thiazoline, 2-mercaptothiazoline, 3-N,N-dimethylaminodithiocarbamoyl-1-propanesulfonic acid, and alcohol sulfur propane sulfonate.

The gelatin has a weight-average molecular weight of 30,000-60,000, and the polyethylene glycol has an average molecular weight of 100-10,000.

The nitrogen-containing compound includes one or more of alkylated polyethyleneimine, ethoxylated polyethyleneimine, N,N-dimethylformamide, and polyacrylamide.

The polyether compound includes one or more of polyether carboxylate, polyoxyethylene octylphenol ether, polyacrylate polyether, and carboxyethyl cellulose.

Preferably, Cl⁻ is from HCl.

Preferably, the concentration of the organic sulfide in the electrolyte is in a range of 30 mg/L-100 mg/L; the concentration of the gelatin in the electrolyte is in a range of 5 mg/L-15 mg/L; the concentration of the polyethylene glycol in the electrolyte is in a range of 1 mg/L-20 mg/L; the concentration of the nitrogen-containing compound in the electrolyte is in a range of 10 mg/L-20 mg/L; the concentration of the polyether compound in the electrolyte is in a range of 1 mg/L-20 mg/L; and the concentration of Cl⁻ in the electrolyte is in a range of 10 ppm-40 ppm.

Preferably, a flow rate of the electrolyte is in a range of 40 m³/h-50 m³/h, and a current density of the electroplating is in a range of 6000 A/m²-7000 A/m².

The second aspect of the present disclosure provides a high-temperature ultra-high-strength and high-elongation lithium-ion battery copper foil, whose physical property degradation is less than 5% after baking at 150°C for 160 minutes.

Preferably, the copper foil has a tensile strength of 600 MPa-700 MPa, and an elongation of 4%-6%.

Preferably, the copper foil includes an optimized structural configuration with an average grain size of 0.3-0.4 µm and a twin fraction of 50%-70%.

Compared to the prior art, the present disclosure offers the following beneficial effects: by introducing a high-performance additive, the present disclosure enables grain refinement and uniform grain distribution within the copper foil, thereby enhancing its strength and ductility. Furthermore, the improved copper foil exhibits excellent thermal stability and strength retention after exposure to high-temperature environments, ensuring long-term structural and performance stability following the high-temperature charge-discharge cycling of silicon-based anode batteries.

### BRIEF DESCRIPTION OF THE DRAWINGS

FIG. 1 is an electron backscatter diffraction (EBSD) image showing the cross-sectional structure of a copper foil prepared according to Example 4.
FIG. 2 is an EBSD image showing the cross-sectional structure of a copper foil prepared according to Comparative Example 2.
FIG. 3 is a transmission electron microscopy (TEM) image of the copper foil prepared according to Example 4.

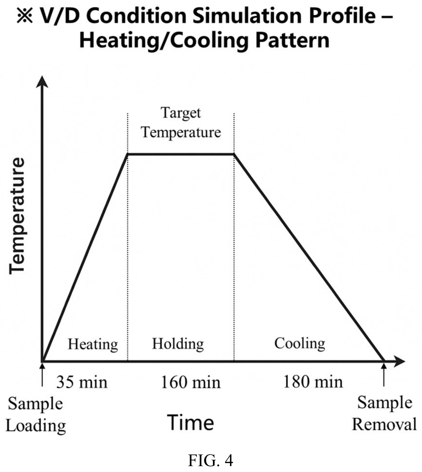

FIG. 4 is a schematic diagram showing the procedure of the high-temperature baking test.

In the drawings, the double-sided copper foil includes a matte side (M side) and a shiny side (S side), where the S side refers to the surface attached to the cathode roller, and the M side corresponds to the opposite surface.

### DETAILED DESCRIPTION OF THE PREFERRED EMBODIMENTS

To make the objectives, technical solutions, and advantages of the present disclosure clearer, the present disclosure will be further described in detail below in conjunction with specific embodiments. It should be understood that the specific embodiments described herein are merely used to explain the present disclosure and are not intended to limit the present disclosure.

In the first embodiment of the present disclosure, an electrolyte additive for electrolytic copper foil is provided. The electrolyte additive includes: 30-100 parts by weight of organic sulfide, 5-15 parts by weight of gelatin, 1-20 parts by weight of polyethylene glycol, 10-20 parts by weight of nitrogen-containing compound, 1-20 parts by weight of polyether compound, and 10-40 parts by weight of Cl⁻. Preferably, the electrolyte additive includes: 40-80 parts by weight of organic sulfide, 5-10 parts by weight of gelatin, 5-15 parts by weight of polyethylene glycol, 10-15 parts by weight of nitrogen-containing compound, 1-10 parts by weight of polyether compound, and 15-35 parts by weight of Cl⁻.

The additive not only includes the organic sulfide as a brightener, but also employs the nitrogen-containing compound as a leveling agent. The synergistic action between these two types of components of the additive enables the production of copper foil with extremely high tensile strength and significantly improved elongation, while maintaining excellent surface stability.

The effectiveness of the additive lies in the rational proportioning of the two components of the additive. The organic sulfide, functioning as a brightener, cooperates with the leveling agent (including gelatin and the nitrogen-containing compound) to form a more uniform and compact crystal structure in the copper foil, and to generate a large number of nanocrystalline domains. This refined crystal structure enhances the tensile strength of the copper foil. At the same time, the synergistic effect of the additive promotes the formation of numerous twins within the copper foil, significantly increasing the proportion and occurrence of nano-twins. The favorable interaction between fine grains and nano-twins improves the tensile strength of the copper foil while simultaneously increasing its elongation.

Based on the theoretical principles of grain refinement and nano-twinned structure enhancement, the present disclosure breaks through the limitations of conventional formulations. By employing the specific additive with optimized proportions between the components, the introduction of impurities is minimized. Additionally, a large number of nanocrystalline domains are formed, and the proportion of twin structures is markedly increased, resulting in a distinct nano-twinned structure.

The present disclosure offers multiple advantages. First, the tensile strength of the copper foil is substantially increased, providing superior mechanical properties. Second, through grain refinement and the formation of nano-twinned structures, a higher elongation is achieved, ensuring that the copper foil maintains both strength and ductility.

Compared with traditional formulations, the optimized composition and proportion of the additive effectively reduce impurity introduction, thereby improving the purity and quality of the copper foil. Additionally, the generation of numerous nanocrystalline domains introduces more grain boundary strengthening mechanisms, further enhancing the copper foil's mechanical performance.

In summary, the additive, based on the theoretical principles of grain refinement and nano-twinned structure enhancement, achieves a technological breakthrough in copper foil production by optimizing its composition and proportion. The present disclosure improves the elongation of the copper foil while maintaining the high tensile strength of the copper foil, effectively overcoming the limitations of traditional formulations. The present disclosure is expected to promote significant advances in the field of copper foil fabrication and provide high-quality copper foil materials for related applications.

In the additive, the organic sulfide functions as a brightener. The organic divalent sulfide used in the present disclosure may be selected from commonly used sulfur-containing organic compounds that function as brighteners. In certain embodiments, the organic sulfide includes, but is not limited to, 3-mercapto-1-propanesulfonate, bis-(3-sulfopropyl) disulfide, 2-mercaptothiazoline, and 3-N,N-dimethylaminodithiocarbamoyl-1-propanesulfonic acid. Organic sulfides are widely recognized as grain refiners. By adsorbing onto the crystal growth surface of copper ions, they lower the surface energy of metallic copper, thereby interfering with the ordered growth of the copper lattice and promoting the formation of finer grains. The increase in the number of fine grains results in a corresponding increase in the number of grain boundaries within the copper foil, thereby enhancing the material strength (as applied in the Hall-Petch relationship), which is one of the essential physical properties for ultra-high strength.

The additive of the present disclosure employs gelatin as a leveling agent. The gelatin used herein may be a conventional commercial gelatin. To improve its dispersibility in the electrolyte, in certain embodiments, the weight-average molecular weight of the gelatin is in a range of 30,000-60,000. Gelatin contains a large number of functional groups, such as carboxyl and amino groups, which can form stable complexes with copper ions. During the growth process of the electrolytic copper foil, these complexes selectively adsorb onto specific crystal growth faces, thereby reducing the deposition rate of copper on those faces. This selective adsorption slows the reduction of copper ions on the electrode surface, facilitating the formation of finer and more uniform grains. Moreover, the active groups within the gelatin strongly bind with copper ions and form a complex layer at the copper deposition interface, which blocks or retards the regular growth of the copper lattice. As a result, more grain boundaries are formed within the copper foil, contributing further to grain refinement and enhanced material strength.

The additive of the present disclosure employs polyethylene glycol (PEG) as a positioning agent. The polyethylene glycol used herein may be a conventional commercial product. In certain embodiments, the average molecular weight of the polyethylene glycol is approximately 6000. The mechanism of polyethylene glycol in the copper deposition process involves adsorbing onto the crystal growth surfaces of copper and forming a barrier layer. This barrier layer alters and slows the diffusion rate of copper ions on the crystal growth surface, thereby retarding the crystal growth rate and promoting the formation of more equiaxed grains. In addition, the molecular weight and concentration of polyethylene glycol significantly influence its suppressing effect: higher molecular weight polyethylene glycol exhibits a stronger inhibitory effect on grain growth.

The additive of the present disclosure employs a nitrogen-containing compound as a second leveling agent. The nitrogen-containing compound used herein may be selected from commonly used nitrogen-containing leveling agents, including one or more of alkylated polyethyleneimine, ethoxylated polyethyleneimine, and N,N-dimethylformamide. The molecular weight of the nitrogen-containing compound used as a leveling agent in the present disclosure is not particularly limited. Nitrogen-containing compounds, especially nitrogen-containing heterocycles such as pyridine, are generally regarded as nucleophilic agents during the electrodeposition process. Their mechanism of action may be somewhat similar to that of gelatin and organic sulfides, in that they form coordination complexes with copper ions to slow down the deposition reaction and influence the quality of the deposited layer. However, their effect on crystal nucleation may differ, as they can sometimes increase the density of crystal nuclei, thereby contributing to grain refinement.

The additive of the present disclosure further employs a polyether compound as a second positioning agent. In certain embodiments, the polyether compound includes, but is not limited to, polyether carboxylates, polyoxyethylene octylphenol ethers, and carboxyethyl cellulose. Oxygen atoms in the polyether compounds form coordination bonds with copper ions, thereby stabilizing the crystal growth process. Their presence may affect the degree of lattice distortion during the deposition process, thus influencing the crystalline quality and uniformity of the deposited layer. Moreover, polyether compounds can reduce the internal stress of the copper foil, facilitating the formation of more complete crystal grains and enhancing the ductility of the material.

The additive of the present disclosure further employs chloride ions (Cl⁻) as a third leveling agent. In certain embodiments, the chloride ions (Cl⁻) originate from hydrochloric acid (HCl). Chloride ions play a critical role during the electrolysis process, as they can adsorb onto specific crystal growth faces, thereby influencing crystal growth behavior and crystalline properties. During electrodeposition, chloride ions typically induce changes in the surface morphology and contribute to grain refinement of the copper foil.

The above-mentioned components of the additive can act individually or synergistically to tailor the properties of the copper foil. Their interactions generally involve the following:

Competitive adsorption: Different components of the additive may compete for adsorption sites on copper ions or on the crystal growth surfaces of copper.

Synergistic effects: One component of the additive may alter the chemical kinetics of the solution, thereby enhancing or inhibiting the effectiveness of another component of the additive.

Chemical interactions: Components of the additive may undergo reactions with other species in the solution, such as redox reactions or the formation of more complex coordination compounds, thus modifying their chemical property.

Organic sulfides typically interfere with the growth of copper crystal faces by forming a thin layer of copper sulfide, which allows them to directly interact with copper ions and influence copper deposition. When organic sulfides coexist with other suppressors such as polyethylene glycol (PEG) or polyether compounds, their effects may be amplified due to the interaction with the suppressors. For instance, the adsorption layer formed by PEG may reduce the number of crystal faces requiring coverage by the organic sulfide, thereby concentrating and enhancing the effect of the organic sulfide. Gelatin contains functional groups capable of forming complexes with copper ions, which slows the growth rate of specific crystal faces and introduces selectivity to the reduction of copper ions at the electrode surface. PEG can also adsorb onto crystal faces to form a barrier layer. When used in combination, gelatin and PEG may form a more stable and uniform barrier layer on the crystal face, effectively limiting crystal growth along specific directions and resulting in finer and more uniform grains. Chloride ions (Cl⁻) exert a particularly unique influence on the electrolytic copper foil. Chloride ions increase the conductivity of the electrolyte and can form easily deposited cuprous chloride (CuCl) complexes with copper. This enables chloride ions for cooperative use with other components of the additive. For example, the combination of chloride ions and organic sulfides can further refine the grain size. After the introduction of chloride ions, other components of the additive may also exhibit more selective adsorption on copper crystal faces, as the deposition potential of copper ions is altered by the presence of chloride ions. Certain nitrogen-containing compounds, such as pyridine and its derivatives, may form coordination complexes with copper ions that increase the density of crystal nuclei, thereby refining the grain size. When the nitrogen-containing compounds are used together with polyether compound positioning agents, complementary effects may occur: polyether compounds slow down copper reduction and crystal growth to promote uniform deposition, while nitrogen-containing compounds catalyze nucleation formation at lower coverage, leading to more numerous and smaller crystal nuclei. The combination of organic sulfide brighteners with gelatin and nitrogen-containing leveling agents results in a uniform and compact crystal structure of the copper foil, generating a large number of nanocrystalline domains. This structure enhances the grain refinement strengthening effect, while simultaneously promoting the formation of numerous twins within the copper foil. The synergistic interaction significantly increases the likelihood and fraction of nano-twin formation. The cooperative strengthening effect between fine grains and nano-twinned structures not only improves the tensile strength of the copper foil but also enhances its elongation. The high-temperature performance of the copper foil depends on the stability of the microstructure formed during the manufacturing process. Certain components of the additive, such as PEG and polyether compounds, can suppress grain growth at high temperature, preventing degradation of properties during heat treatment. Moreover, the refined grains provide a larger number of grain boundaries that can absorb and release thermal stress, thereby reducing dislocation motion at high temperature and improving the thermal stability of the material.

In some embodiments, the amount of the organic sulfide includes, but is not limited to, 40 parts, 45 parts, 50 parts, 55 parts, 60 parts, 65 parts, 70 parts, 75 parts, or 80 parts by weight.

In some embodiments, the amount of gelatin includes, but is not limited to, 5 parts, 8 parts, or 10 parts by weight.

In some embodiments, the amount of the polyethylene glycol includes, but is not limited to, 5 parts, 10 parts, or 15 parts by weight.

In some embodiments, the amount of the nitrogen-containing compound includes, but is not limited to, 10 parts, 11 parts, 12 parts, 13 parts, 14 parts, or 15 parts by weight.

In some embodiments, the amount of the polyether compound includes, but is not limited to, 1 part, 2 parts, 3 parts, 4 parts, 5 parts, 6 parts, 7 parts, 8 parts, 9 parts, or 10 parts by weight.

In some embodiments, the amount of chloride ions (Cl-) includes, but is not limited to, 15 parts, 20 parts, 25 parts, 30 parts, or 35 parts by weight.

In the second embodiment of the present disclosure, a process for producing a copper foil is provided, which includes the following steps:
Step S1': mixing raw copper, sulfuric acid, and the above-mentioned electrolyte additive to form an electrolyte;
Step S2': electroplating copper ions from the electrolyte to obtain a raw foil; and
Step S3': subjecting the raw foil to surface passivation and drying to obtain the copper foil.

In some embodiments, the process further includes the following steps:
Step S1: dissolving raw copper in a sulfuric acid solution, performing filtering to remove impurities and obtain a filtrate, and mixing the filtrate with a composite additive to obtain an electrolyte; wherein the composite additive includes an organic sulfide, gelatin, polyethylene glycol, a nitrogen-containing compound, a polyether compound, and Cl⁻;
Step S2: introducing the electrolyte through a pipe into an electrolytic cell of a foil-forming machine, and obtaining a copper foil intermediate after electroplating; and
Step S3: subjecting the copper foil intermediate to surface passivation, drying, and winding to obtain the high-temperature ultra-high-strength and high-elongation high lithium-ion battery copper foil.

The production process of the present disclosure employs the above-mentioned specific additive. During electrolysis, a large number of nanocrystalline domains are generated, while the proportion of twin structures in the copper foil is increased, resulting in a distinct nano-twinned structure. This ensures that the copper foil maintains high tensile strength while retaining excellent elongation. At the same time, a more uniform and refined grain structure is obtained, thereby maintaining the stability of the copper foil at high temperature.

In some embodiments of the present disclosure, the concentration of copper ions in the electrolyte ranges from 85 g/L to 95 g/L, the concentration of sulfuric acid ranges from 110 g/L to 130 g/L, and the electrolyte temperature is maintained at 50°C, thereby improving the stability of the electrolysis process.

In some embodiments of the present disclosure, the electrolyte additive in the electrolyte includes one or more of the following: the concentration of the organic sulfide in the electrolyte is in a range of 40 mg/L-80 mg/L; the concentration of the gelatin in the electrolyte is in a range of 5 mg/L-10 mg/L; the concentration of the polyethylene glycol in the electrolyte is in a range of 1 mg/L-15 mg/L; the concentration of the nitrogen-containing compound in the electrolyte is in a range of 10 mg/L-15 mg/L; the concentration of the polyether compound in the electrolyte is in a range of 1 mg/L-10 mg/L; and the concentration of Cl⁻ in the electrolyte is in a range of 15 ppm-35 ppm. By controlling the concentration of each component within the above ranges during the electrolysis process, sufficient synergistic effects among the components can be achieved, thereby simultaneously improving the tensile strength, elongation, and high-temperature stability of the copper foil.

The electrolysis conditions of the present disclosure may refer to conventional conditions used for electrolytic copper foil, meaning that the use of the electrolyte additive of the present disclosure does not require modification of standard electrolysis parameters, thus ensuring wide applicability. In some embodiments, the electrolysis conditions are as follows: the flow rate of the electrolyte ranges from 40 m³/h to 50 m³/h, and the current density ranges from 6000 A/m² to 7000 A/m², so as to facilitate the full performance of the electrolyte additive.

The washing and passivation processes after electrolysis may refer to commonly used washing and passivation methods for electrolytic copper foil and will not be further described herein.

In the third embodiment of the present disclosure, an electrolytic copper foil is provided, whose physical property degradation is less than 5% after baking at 150°C for 160 minutes.

The third embodiment of the present disclosure further provides an electrolytic copper foil, wherein the electrolytic copper foil has a tensile strength of 600 MPa-700 MPa and an elongation of 4%-6%.

The third embodiment of the present disclosure further provides an electrolytic copper foil, wherein the electrolytic copper foil has an optimized structural configuration with an average grain size of 0.3-0.4 µm and a twin fraction of 50%-70%.

The electrolytic copper foil of the present disclosure is an ultra-high-strength and high-elongation copper foil under high temperature. The combination of ultra-high tensile strength and excellent elongation can effectively improve the production efficiency of lithium-ion battery manufacturing processes and the safety of lithium-ion batteries, such as coating and wrinkling, as well as multi-layer winding operations.

The above tensile strength and elongation of the copper foil were determined in accordance with test method GB/T 29847-2013, using a HY-0230 universal testing machine manufactured by Shanghai Hengyi Precision Instrument Co., Ltd., under room temperature conditions (approximately 25 °C).

In the fourth embodiment of the present disclosure, an electrolytic copper foil prepared by the above-mentioned production method is provided. The electrolytic copper foil of the present disclosure is a high-temperature ultra-high-strength and high-elongation copper foil. The combination of ultra-high tensile strength and excellent elongation can effectively improve the production efficiency of lithium-ion battery manufacturing processes and the safety of lithium-ion batteries, such as coating and wrinkling, as well as multi-layer winding operations.

The beneficial effects of the present disclosure are further illustrated by the following examples and comparative examples. Unless otherwise specified, the technical conditions or procedures described in the examples are in accordance with those commonly known in the art or as specified in relevant product manuals. The reagents and instruments used in the examples are commercially available unless otherwise indicated.

### Example 1

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the 3-mercapto-1-propanesulfonate concentration was 45 mg/L, the gelatin (molecular weight 50,000-60,000) concentration was 8 mg/L, the polyethylene glycol (average molecular weight 6,000) concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 2

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate (10 mg/L) and bis-(3-sulfopropyl) disulfide (35 mg/L) was 45 mg/L, the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 3

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 2-mercaptothiazoline was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 4

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 5

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and formyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 6

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 15 mg/L (with a mass ratio of 2:1), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 7

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 60 mg/L (with a mass ratio of 1:3), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 8

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 5 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 9

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 10 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 10

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 30,000-40,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 11

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 5 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 12

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 10 mg/L, the ethoxylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 13

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 15 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 14

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the alkylated polyethyleneimine concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 15

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the N,N-dimethylformamide concentration was 10 mg/L, the chloride ion concentration was 25 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 16

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 15 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 17

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 35 ppm, and the polyether carboxylate concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 18

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 1 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 19

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyether carboxylate concentration was 10 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 20

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether (with n = 15) concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 21

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the carboxyethyl cellulose concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 22

Raw copper was dissolved in a sulfuric acid solution, followed by filtration to remove impurities, the resulting filtrate was mixed with a composite additive to obtain an electrolyte. In the obtained electrolyte, the copper ion concentration was 85 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 23

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 110 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 24

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 130 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 45 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 25

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 40 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 26

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 50 m³/h and an electroplating current density of 6,500 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 27

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 45 m³/h and an electroplating current density of 6,000 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Example 28

Raw copper was dissolved in a sulfuric acid solution, followed by filtration to remove impurities, the resulting filtrate was mixed with a composite additive to obtain an electrolyte. In the obtained electrolyte, the copper ion concentration was 95 g/L, the sulfuric acid concentration was 115 g/L, the total concentration of the 3-mercapto-1-propanesulfonate and 3-N,N-dimethylaminodithiocarbamoyl-1-propanesulfonic acid was 45 mg/L (with a mass ratio of 1:2), the gelatin (molecular weight 50,000-60,000) concentration was 8 mg/L, the polyethylene glycol concentration was 8 mg/L, the ethoxylated polyethyleneimine concentration was 10 mg/L, the chloride ion concentration was 25 ppm, and the polyoxyethylene octylphenol ether concentration was 5 mg/L. The electrolysis was conducted at a temperature of 50 °C, with an electrolyte flow rate of 45 m³/h and an electroplating current density of 7,000 A/m². The electrolyte was introduced through a pipe into the electrolytic cell of the foil-forming machine. After electroplating, a copper foil intermediate was obtained. The copper foil intermediate was then subjected to surface passivation treatment, drying, and winding, to obtain the ultra-high-strength lithium-ion battery copper foil.

### Comparative Example 1

The procedure was the same as in Example 1, except that 3-mercapto-1-propanesulfonate in the electrolyte was replaced with bis-(sodium sulfoethyl) disulfide.

### Comparative Example 2

The procedure was the same as in Example 1, except that 3-mercapto-1-propanesulfonate in the electrolyte was replaced with dimethyl sulfoxide.

### Comparative Example 3

The procedure was the same as in Example 1, except that 3-mercapto-1-propanesulfonate in the electrolyte was replaced with 2-methyl-2-thiazoline.

### Comparative Example 4

The procedure was the same as in Example 1, except that 3-mercapto-1-propanesulfonate in the electrolyte was replaced with alcohol sulfur propane sulfonate.

### Comparative Example 5

The procedure was the same as in Example 1, except that bis-(sodium-sulfoethyl) disulfide was additionally added to the electrolyte.

### Comparative Example 6

The procedure was the same as in Example 4, except that the total concentration of 3-mercapto-1-propanesulfonate and 3-N,N-dimethylaminodithiocarbamoyl-1-propanesulfonic acid in the electrolyte was adjusted to 15 mg/L (with a mass ratio of 1:2 between the two).

### Comparative Example 7

The procedure was the same as in Example 4, except that the total concentration of 3-mercapto-1-propanesulfonate and 3-N,N-dimethylaminodithiocarbamoyl-1-propanesulfonic acid in the electrolyte was adjusted to 60 mg/L.

### Comparative Example 8

The procedure was the same as in Example 4, except that the concentration of gelatin in the electrolyte was adjusted to 0 mg/L.

### Comparative Example 9

The procedure was the same as in Example 4, except that the concentration of polyethylene glycol in the electrolyte was adjusted to 20 mg/L.

### Comparative Example 10

The procedure was the same as in Example 4, except that ethoxylated polyethyleneimine in the electrolyte was replaced with polyacrylamide.

### Comparative Example 11

The procedure was the same as in Example 4, except that the concentration of ethoxylated polyethyleneimine in the electrolyte was adjusted to 5 mg/L.

### Comparative Example 12

The procedure was the same as in Example 4, except that the concentration of chloride ions in the electrolyte was adjusted to 50 ppm.

### Comparative Example 13

The procedure was the same as in Example 4, except that polyether carboxylate was replaced with polyacrylate polyether in the electrolyte.

### Comparative Example 14

The procedure was the same as in Example 4, except that the concentration of polyether carboxylate in the electrolyte was adjusted to 15 mg/L.

### Comparative Example 15

The procedure was the same as in Example 4, except that the concentration of copper ions in the electrolyte was adjusted to 80 g/L.

### Comparative Example 16

The procedure was the same as in Example 4, except that the concentration of copper ions in the electrolyte was adjusted to 100 g/L.

### Comparative Example 17

The procedure was the same as in Example 4, except that the concentration of sulfuric acid in the electrolyte was adjusted to 100 g/L.

### Comparative Example 18

The procedure was the same as in Example 4, except that the electrolyte flow rate was adjusted to 35 m³/h.

### Comparative Example 19

The procedure was the same as in Example 4, except that the electroplating current density was adjusted to 5000 A/m².

The microstructure and basic physical properties of the electrolytic copper foils prepared in Examples 1-28 and Comparative Examples 1-19 were evaluated. The testing methods for microstructure and basic physical properties are as follows:

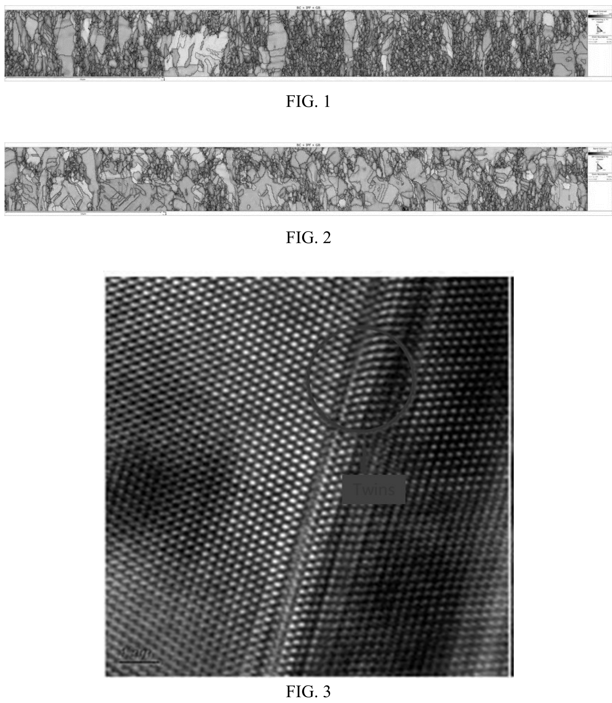

Electron Backscatter Diffraction (EBSD) Analysis: The microstructure of copper foil samples from the Examples and Comparative Examples was observed using a C-Swift EBSD detector manufactured by Oxford Instruments, UK. The EBSD images of Example 4 and Comparative Example 6 are shown in FIGs. 1 and 2, respectively. As shown in FIG. 1, the copper foil of Example 4 exhibits a large number of nanocrystalline domains and twin domains. In contrast, FIG. 2 shows that the copper foil of Comparative Example 6 possesses relatively coarse grains, containing only a small proportion of nanocrystalline domains and fewer twin domains. The TEM image of the copper foil obtained in Example 3 is shown in FIG. 3, where a distinct nano-twinned structure can be observed.

Tensile Strength and Elongation Testing: The tensile strength and elongation of the copper foils were tested in accordance with GB/T 29847-2013, using a HY-0230 universal testing machine manufactured by Shanghai Hengyi Precision Instrument Co., Ltd. under room temperature conditions (approximately 25 °C).

The microstructure and basic physical property test results of the electrolytic copper foils prepared according to the Examples and Comparative Examples are summarized in Table 1 below.

**Table 1: Physical Property Test Results of Electrolytic Copper Foils**

| Name | Thickness | Tensile Strength | Elongation | High-Temperature Tensile Strength | High-Temperature Elongation | Grain Size | Twin Fraction |
|---|---|---|---|---|---|---|---|
| | (µm) | (MPa) | (%) | (MPa) | (%) | (µm) | (%) |
| Example 1 | 6 | 634.5 | 4.1 | 620.0 | 4.5 | 0.34 | 55.47% |
| Example 2 | 6 | 603.1 | 4.5 | 600.0 | 4.5 | 0.40 | 62.77% |
| Example 3 | 6 | 653.6 | 4.8 | 630.0 | 5 | 0.31 | 58.35% |
| Example 4 | 6 | 650.0 | 5.8 | 646.0 | 6 | 0.39 | 66.83% |
| Example 5 | 6 | 617.7 | 5 | 610.0 | 5.1 | 0.42 | 62.72% |
| Example 6 | 6 | 612.0 | 4.4 | 605.0 | 4.8 | 0.46 | 67.58% |
| Example 7 | 6 | 660.9 | 5.2 | 656.0 | 5.5 | 0.43 | 57.54% |
| Example 8 | 6 | 622.1 | 5.6 | 620.0 | 5.8 | 0.45 | 66.85% |
| Example 9 | 6 | 660.3 | 4.3 | 650.0 | 4.7 | 0.41 | 62.92% |
| Example 10 | 6 | 625.8 | 4.3 | 621.0 | 4.5 | 0.46 | 64.38% |
| Example 11 | 6 | 648.0 | 5.3 | 644.0 | 5.5 | 0.37 | 63.70% |
| Example 12 | 6 | 607.0 | 5.4 | 607.0 | 5.5 | 0.47 | 53.93% |
| Example 13 | 6 | 657.6 | 4.2 | 632.0 | 4.2 | 0.44 | 62.43% |
| Example 14 | 6 | 647.3 | 4.4 | 625.0 | 4.5 | 0.50 | 52.95% |
| Example 15 | 6 | 615.8 | 4.6 | 605.0 | 4.9 | 0.39 | 60.88% |
| Example 16 | 6 | 669.3 | 4.5 | 600.0 | 4.7 | 0.49 | 59.46% |
| Example 17 | 6 | 618.7 | 5.3 | 610.0 | 5.5 | 0.44 | 54.69% |
| Example 18 | 6 | 611.0 | 5.2 | 608.0 | 5.3 | 0.35 | 71.73% |
| Example 19 | 6 | 624.0 | 5.5 | 621.0 | 5.7 | 0.38 | 58.68% |
| Example 20 | 6 | 664.3 | 4.5 | 652.0 | 4.5 | 0.44 | 55.67% |
| Example 21 | 6 | 673.8 | 4.5 | 654.0 | 4.6 | 0.37 | 57.60% |
| Example 22 | 6 | 623.5 | 5 | 624.0 | 5 | 0.42 | 61.25% |
| Example 23 | 6 | 616.0 | 5.1 | 616.0 | 5.3 | 0.43 | 57.75% |
| Example 24 | 6 | 635.1 | 5.4 | 631.0 | 5.4 | 0.38 | 57.09% |
| Example 25 | 6 | 647.2 | 5.3 | 644.0 | 5.5 | 0.27 | 60.64% |
| Example 26 | 6 | 639.2 | 5.4 | 630.0 | 5.7 | 0.41 | 66.90% |
| Example 27 | 6 | 601.4 | 5.5 | 600.0 | 5.6 | 0.47 | 55.24% |
| Example 28 | 6 | 639.8 | 5.6 | 635.0 | 5.7 | 0.36 | 65.23% |
| Control Example 1 | 6 | 560.0 | 5 | 525.0 | 5.1 | 0.52 | 54.32% |
| Control Example 2 | 6 | 555.0 | 5.4 | 525.0 | 5.4 | 0.48 | 53.15% |
| Control Example 3 | 6 | 573.0 | 4.8 | 545.0 | 5 | 0.45 | 56.15% |
| Control Example 4 | 6 | 537.0 | 4.5 | 530.0 | 4.6 | 0.48 | 51.35% |
| Control Example 5 | 6 | 587.0 | 5.2 | 576.0 | 5.3 | 0.43 | 55.33% |
| Control Example 6 | 6 | 544.0 | 5.6 | 541.0 | 5.8 | 0.45 | 56.26% |
| Control Example 7 | 6 | 577.0 | 5.1 | 571.0 | 5.1 | 0.47 | 51.25% |
| Control Example 8 | 6 | 490.0 | 5.3 | 487.0 | 5.4 | 0.55 | 47.23% |
| Control Example 9 | 6 | 498.0 | 6.3 | 477.0 | 6.5 | 0.56 | 46.25% |
| Control Example 10 | 6 | 514.0 | 5.5 | 501.0 | 5.5 | 0.54 | 47.83% |
| Control Example 11 | 6 | 552.0 | 5.4 | 556.0 | 5.6 | 0.47 | 54.23% |
| Control Example 12 | 6 | 478.0 | 6.2 | 456.0 | 5.6 | 0.61 | 45.76% |
| Control Example 13 | 6 | 512.0 | 4.3 | 501.0 | 4.3 | 0.55 | 47.83% |
| Control Example 14 | 6 | 516.0 | 6.5 | 512.0 | 6.5 | 0.44 | 51.02% |
| Control Example 15 | 6 | 535.0 | 4.6 | 517.0 | 4.5 | 0.53 | 47.83% |
| Control Example 16 | 6 | 543.0 | 4.2 | 531.0 | 4.3 | 0.55 | 45.23% |
| Control Example 17 | 6 | 576.0 | 4.4 | 557.0 | 4.5 | 0.51 | 49.36% |
| Control Example 18 | 6 | 515.0 | 4.3 | 502.0 | 4.3 | 0.54 | 43.31% |
| Control Example 19 | 6 | 576.0 | 3.9 | 565.0 | 4.1 | 0.56 | 42.38% |

The high-temperature ultra-high-strength and high-elongation lithium-ion battery copper foil provided by the present disclosure can significantly enhance the overall performance and extend the service life of silicon-based lithium-ion batteries, which is of profound significance for the future development of advanced energy storage systems.

Compared to conventional lithium-ion batteries, the combination of ultra-high tensile strength and excellent elongation of the copper foil provided by the present disclosure can effectively improve the production efficiency of lithium-ion battery manufacturing processes and safety of lithium-ion batteries, such as coating and wrinkling, as well as multi-layer winding operations.

Coating and Wrinkling: During the electrode coating process of lithium-ion batteries, the active materials must be uniformly coated onto the copper foil. The ultra-high-strength and high-elongation copper foil can better withstand the mechanical and tensile stresses occurring during the coating process, thus preventing delamination or mechanical damage of the coating layer. This improves the uniformity and stability of the electrodes, resulting in more consistent battery performance.

Multi-layer Winding: In the fabrication of lithium-ion batteries, the positive and negative electrodes are typically wound into a multilayer structure. The copper foil with high tensile strength and excellent elongation maintains structural integrity and dimensional stability during the winding process, reducing interfacial contact resistance and internal impedance. Consequently, the battery exhibits enhanced performance and longer cycle life.

In summary, the high-temperature ultra-high-strength and high-elongation lithium-ion battery copper foil described herein provides superior mechanical properties, structural reliability, and thermal stability throughout the lithium-ion battery manufacturing process. This contributes to improved battery consistency, extended cycle life, and enhanced safety, thereby promoting the advancement and application of lithium-ion battery technology.

During the preparation of the copper foil, the electrolyte additive is of critical importance. Generally, the additive includes brighteners, leveling agents, and positioning agents. These components work synergistically, enabling the copper foil to develop an optimized microstructure and achieve excellent mechanical properties.

Brighteners are organic sulfides that promote the nucleation of copper ions, resulting in fine-grained, smooth, and lustrous copper foil. By forming coordination bonds with copper ions or copper crystal faces, brighteners modulate the deposition rate and crystal growth mode, thereby achieving effective grain refinement. Leveling agents is used to facilitate the face-centered growth of the grains within the copper foil. They are often composed of proteins with varying molecular weights, which are used to form a protective film during the crystal growth process of the copper foil, thereby regulating the growth rate and crystal morphology, enhancing the compactness and uniformity of the grains. The use of leveling agents results in a smoother copper foil surface, improving both surface flatness and appearance quality of the copper foil. Positioning agents enhance the dispersion and transport properties of the electrolyte as well as ensure that all components of the additive are evenly distributed within the electrolyte during electroplating. Typically, polyether compounds are used as positioning agents, which increase the fluidity of the electrolyte, promote the rapid transport and uniform distribution of the components of the additive, and ensure that all the components of the additive work effectively throughout the copper plating process.

The above are merely some specific embodiments of the present disclosure, but the scope of the present disclosure is not limited to these. Any person skilled in the art, within the technical scope disclosed by the present disclosure, can make equivalent substitutions or modifications based on the technical solutions and inventive concepts of the present disclosure, and such modifications or substitutions should be included within the scope of protection of the present disclosure.

## Claims

1. A method for preparing a high-temperature ultra-high-strength and high-elongation lithium-ion battery copper foil, comprising the following steps:
Step S1: dissolving raw copper in a sulfuric acid solution, performing filtering to remove impurities and obtain a filtrate, and mixing the filtrate with a composite additive to obtain an electrolyte; wherein the composite additive comprises an organic sulfide, gelatin, polyethylene glycol, a nitrogen-containing compound, a polyether compound, and Cl⁻;
Step S2: introducing the electrolyte through a pipe into an electrolytic cell of a foil-forming machine, and obtaining a copper foil intermediate after electroplating; and
Step S3: subjecting the copper foil intermediate to surface passivation, drying, and winding to obtain the high-temperature ultra-high-strength and high-elongation lithium-ion battery copper foil.

2. The method according to claim 1, wherein the raw copper is copper plates or copper wires.

3. The method according to claim 1, wherein in the electrolyte, a concentration of the sulfuric acid is in a range of 110-130 g/L, a concentration of copper ions is in a range of 85-95 g/L, and a temperature of the electrolyte is in a range of 48-52 °C.

4. The method according to claim 1, wherein the composite additive comprises 30-100 parts by weight of the organic sulfide, 5-15 parts by weight of the gelatin, 1-20 parts by weight of the polyethylene glycol, 10-20 parts by weight of the nitrogen-containing compound, 1-20 parts by weight of the polyether compound, and 10-40 parts by weight of Cl⁻;
wherein the organic sulfide comprises one or more of 3-mercapto-1-propanesulfonate, bis-(3-sulfopropyl) disulfide, bis-(sodium sulfoethyl) disulfide, dimethyl sulfoxide, 2-methyl-2-thiazoline, 2-mercaptothiazoline, 3-N,N-dimethylaminodithiocarbamoyl-1-propanesulfonic acid, and alcohol sulfur propane sulfonate;
wherein the gelatin has a weight-average molecular weight of 30,000-60,000;
wherein the polyethylene glycol has an average molecular weight of 100-10,000;
wherein the nitrogen-containing compound comprises one or more of alkylated polyethyleneimine, ethoxylated polyethyleneimine, N,N-dimethylformamide, and polyacrylamide;
wherein the polyether compound comprises one or more of polyether carboxylate, polyoxyethylene octylphenol ether, polyacrylate polyether, and carboxyethyl cellulose.

5. The method according to claim 1, wherein the Cl⁻ is from HCl.

6. The method according to claim 4, wherein a concentration of the organic sulfide in the electrolyte is in a range of 30 mg/L-100 mg/L; a concentration of the gelatin in the electrolyte is in a range of 5 mg/L-15 mg/L; a concentration of the polyethylene glycol in the electrolyte is in a range of 1 mg/L-20 mg/L; a concentration of the nitrogen-containing compound in the electrolyte is in a range of 10 mg/L-20 mg/L; a concentration of the polyether compound in the electrolyte is in a range of 1 mg/L-20 mg/L; and a concentration of Cl⁻ in the electrolyte is in a range of 10 ppm-40 ppm.

7. The method according to claim 4, wherein a flow rate of the electrolyte is in a range of 40 m³/h-50 m³/h, and a current density of the electroplating is in a range of 6000 A/m²-7000 A/m².

8. A high-temperature ultra-high-strength and high-elongation lithium-ion battery copper foil, whose physical property degradation is less than 5% after baking at 150°C for 160 minutes.

9. The copper foil according to claim 8, wherein the copper foil comprises:
a tensile strength of 600 MPa-700 MPa, and an elongation of 4%-6%.

10. The copper foil according to claim 8, wherein the copper foil comprises an optimized structural configuration with an average grain size of 0.3-0.4 µm and a twin fraction of 50%-70%.

11. An electrolyte additive for electrolytic copper foil, based on parts by weight, comprising: 30-100 parts of an organic sulfide, 5-15 parts of gelatin, 1-20 parts of polyethylene glycol, 10-20 parts of a nitrogen-containing compound, 1-20 parts of a polyether compound, and 10-40 parts of Cl⁻.

12. The electrolyte additive according to claim 11, wherein based on parts by weight, the electrolyte additive comprises 40-80 parts of the organic sulfide, 5-10 parts of the gelatin, 5-15 parts of the polyethylene glycol, 10-15 parts of the nitrogen-containing compound, 1-10 parts of the polyether compound, and 15-35 parts of Cl⁻.

13. The electrolyte additive according to claim 11, wherein the electrolyte additive comprises one or more of the following:
wherein the organic sulfide comprises one or more of 3-mercapto-1-propanesulfonate, bis-(3-sulfopropyl) disulfide, bis-(sodium sulfoethyl) disulfide, dimethyl sulfoxide, 2-methyl-2-thiazoline, 2-mercaptothiazoline, 3-N,N-dimethylaminodithiocarbamoyl-1-propanesulfonic acid, and alcohol sulfur propane sulfonate; preferably, the electrolyte additive comprises 1-15 parts of 3-mercapto-1-propanesulfonate;
wherein the gelatin has a weight-average molecular weight of 30,000-60,000;
wherein the polyethylene glycol has an average molecular weight of 100-10000;
wherein the nitrogen-containing compound comprises one or more of alkylated polyethyleneimine, ethoxylated polyethyleneimine, N,N-dimethylformamide, and polyacrylamide;
wherein the polyether compound comprises one or more of polyether carboxylate, polyoxyethylene octylphenol ether, polyacrylate polyether, and carboxyethyl cellulose;
wherein the Cl⁻ is from HCl.

14. A process for producing a copper foil, comprising the following steps:
Step S1': mixing raw copper, sulfuric acid, and the electrolyte additive according to any one of claims 11 to 13 to form an electrolyte;
Step S2': electroplating copper ions from the electrolyte to obtain a raw foil; and
Step S3': subjecting the raw foil to surface passivation and drying to obtain the copper foil.

15. The process according to claim 14, wherein the raw copper is copper plates or copper wires.

16. The process according to claim 14 or 15, wherein the electrolyte additive comprises one or more of the following:
a concentration of the organic sulfide in the electrolyte is in a range of 30 mg/L-100 mg/L;
a concentration of the gelatin in the electrolyte is in a range of 5 mg/L-15 mg/L;
a concentration of the polyethylene glycol in the electrolyte is in a range of 1 mg/L-20 mg/L;
a concentration of the nitrogen-containing compound in the electrolyte is in a range of 10 mg/L-20 mg/L;
a concentration of the polyether compound in the electrolyte is in a range of 1 mg/L-20 mg/L; and
a concentration of Cl⁻ in the electrolyte is in a range of 10 ppm-40 ppm.

17. The process according to any one of claims 14 to 16, wherein the electrolyte comprises the sulfuric acid at a concentration of 110-130 g/L, copper ions at a concentration of 85-95 g/L, and a temperature of the electrolyte is in a range of 48-52 °C.

18. The process according to any one of claims 14 to 17, wherein in Step S2', a flow rate of the electrolyte is in a range of 40 m³/h-50 m³/h, and a current density of the electroplating is in a range of 6000 A/m²-7000 A/m².
